# EUROPÄISCHE PATENTSCHRIFT

(11) **EP 1 134 108 B1**
(45) Veröffentlichungstag und Bekanntmachung des Hinweises auf die Patenterteilung: **13.08.2003**
(21) Anmeldenummer: 01104963.2
(22) Anmeldetag: 01.03.2001
(51) Int. Cl.: B60K 37/00

(54) **Modulare Instrumententafel eines Kraftfahrzeuges**
Modular dashboard for a motor vehicle
Tableau de bord modulaire pour véhicule à moteur

(30) Priorität: 17.03.2000 DE 10013434
(43) Veröffentlichungstag der Anmeldung: 19.09.2001
(73) Patentinhaber: DaimlerChrysler AG, 70567 Stuttgart (DE)
(72) Erfinder: Volkmann, Tilo, 71069 Sindelfingen (DE); Zipperle, Ralf, 75382 Althengstett (DE)

(56) Entgegenhaltungen:
- EP-A- 0 083 701
- EP-A- 0 950 572
- EP-A- 0 955 189
- DE-A- 4 231 219
- DE-A- 19 539 066
- DE-A- 19 737 739
- DE-A- 19 820 581
- FR-A- 2 765 175
- US-A- 5 823 599
- US-A- 5 860 630

## Beschreibung

Die Erfindung betrifft ein modulares System zum Aufbau einer Instrumententafel eines Kraftfahrzeuges mit den Merkmalen des Oberbegriffs des Anspruchs 1.

Ein derartiges System ist beispielsweise aus der EP 0 083 701 A2 bekannt und weist ein Oberteilmodul auf, das sich im wesentlichen über die gesamte Breite des Fahrzeuginnenraumes unterhalb einer Windschutzscheibe des Fahrzeuges erstreckt. Unten an diesem Oberteilmodul ist auf der Fahrerseite ein Fahrerseitenmodul angeordnet, das beispielsweise für den Fahrzeugbetrieb wichtige Instrumente aufweist, wie z.B. Drehzahlmesser, Tachometer, Öltemperaturanzeige. Außerdem ist das Fahrerseitenmodul zur Aufnahme der Lenksäule vorbereitet bzw. vorgeformt. Auf der Beifahrerseite ist unten am Oberteilmodul ein Beifahrerseitenmodul angeordnet, das beispielsweise einen Handschuhkasten aufweist. Zwischen dem Fahrerseitenmodul und dem Beifahrerseitenmodul ist unten am Oberteilmodul ein Mittelkonsolenmodul angeordnet, das beispielsweise Bedienelemente einer Fahrzeugklimatisierungseinrichtung sowie deren Mitteldüsen enthält. Der Modulcharakter einer solchen Instrumententafel ergibt sich dadurch, daß verschieden ausgestaltete Einzelmodule miteinander kombiniert werden können. Beispielsweise werden für das Mittelkonsolenmodul mehrere verschiedene Ausführungsformen bereitgestellt, die dann wahlweise in Abhängigkeit der gewünschten Ausstattungsvariante in die Instrumententafel eingebaut werden. Der große Vorteil eines modularen Systems wird darin gesehen, daß zur Ausbildung verschiedener Varianten nur für die unterschiedlichen Einzelmodule neue Ausführungsformen bereitgestellt bzw. hergestellt werden müssen.

Aus der EP 0 830 967 A1 ist eine Instrumententafel bekannt, die aus wenigstens vier Einzelteilen zusammengebaut wird. Ein Unterteil wird an einem Fahrzeugteil befestigt und besitzt eine nach oben offene, beckenförmige Kontur. Auf dem Unterteil ist oben und mittig ein Instrumentenblock angeordnet. An beiden Seiten des Instrumentenblocks sind beckenförmige Deckel angeordnet, die mit Schnellbefestigungsmittel am Unterteil sowie aneinander lösbar befestigt sind. Diese Deckel können verschiedene Ausführungsformen aufweisen, so daß sich in Abhängigkeit der Kundenwünsche individuell gestaltete Instrumententafeln aufbauen lassen.

Die FR 2765175 A zeigt eine modular aufgebaute Instrumententafel.

Die DE 43 07 224 A1 zeigt eine Telefonkonsole, die im Fußraum des Beifahrers an der Mittelkonsole der Instrumententafel angebracht ist und eine Telefonanlage beinhaltet. Die hier gezeigte Telefonanlage wird somit durch ein Zusatzbauteil gebildet, das zusätzlich an einer herkömmlichen Instrumententafel angebracht werden kann, wobei dies auf Kosten des Fußraumes des Beifahrers erfolgt.

Die DE 92 02 265 U1 zeigt ebenfalls eine Telefonkonsole, die als Zusatzbauteil im Fußraum des Beifahrers seitlich an die Mittelkonsole der Instrumententafel optional angesetzt werden kann.

Die DE 40 13 209 A1 zeigt eine Ablagekonsole für einen Bedienhörer eines Autotelefons, die auf eine Seitenwange einer Mittelkonsole der Instrumententafel aufgesteckt ist. Auch diese aufsteckbare Ablagekonsole bildet somit ein zusätzlich an einer herkömmlichen Instrumententafel anbringbares Bauteil.

Die vorliegende Erfindung beschäftigt sich mit dem Problem, die Anpassbarkeit einer Instrumententafel der eingangs genannten Art an Kundenwünsche zu verbessern.

Dieses Problem wird erfindungsgemäß durch ein modulares System mit den Merkmalen des Anspruchs 1 gelöst.

Die Erfindung beruht auf dem allgemeinen Gedanken, in die Instrumententafel zusätzlich ein Variomodul zu integrieren, wobei für dieses Variomodul wenigstens zwei verschiedene Varianten vorgesehen sind, nämlich mindestens eine Grundausstattungsvariante und mindestens eine Sonderausstattungsvariante. Die Grundausstattungsvariante des Variomoduls dient in ihrer einfachsten Ausführungsform als Verkleidungselement, das in die Außenkontur der Instrumententafel integriert ist. In der Sonderausstattungsvariante des Variomoduls ist dieses als Funktionselement ausgebildet, dem eine Zusatzfunktion für die Instrumententafel oder für den Fahrzeugkomfort zugeordnet ist. Die Zusatzfunktion des Funktionselements hängt dabei vom jeweiligen Fahrerwunsch ab bzw. von der vom Fahrzeughersteller bereitgestellten Auswahl an Sonderausstattungsvarianten.

Durch das zusätzliche Variomodul wird die Variabilität der Instrumententafel vergrößert, so daß die Instrumententafel besser an Kundenwünsche angepaßt werden kann. Denn durch das Variomodul können optionale Sonderwünsche mit der Sonderausstattungsvariante des Variomoduls berücksichtigt werden. Wenn der Kunde eine solche Sonderausstattung nicht wünscht, kann dann eine Grundausstattungsvariante des Variomoduls zum Zusammenbau der Instrumententafel verwendet werden.

Die Integration des Variomoduls in die Instrumententafel hat dabei keinerlei Beeinträchtigung im Fußraumbereich des Beifahrers zur Folge. Komforteinbußen, Verletzungsgefahren für den Beifahrer sowie Beschädigungsgefahren für Bestandteile der Instrumententafel werden dadurch reduziert.

Entsprechend einer bevorzugten Ausführungsform kann das Variomodul in seiner Sonderausstattungsvariante zur Aufnahme eines Telefons oder einer Telefonanlage oder einer Funksprechanlage ausgebildet sein. Auf diese Weise können relativ teure Sonderausstattungen optional in die Instrumententafel integriert werden.

Entsprechend einer besonders vorteilhaften Ausführungsform kann das Variomodul mit Schnellbefestigungsmitteln am Beifahrerseitenmodul und/oder am Mittelkonsolenmodul und/oder am Oberteilmodul befestigt sein, wodurch die Integration des Variomoduls in die Instrumententafel bei deren Zusammenbau vereinfacht ist.

Von besonderem Vorteil ist eine Ausführungsform, bei der die Schnellbefestigungsmittel des Variomoduls lösbar ausgebildet sind, derart, daß Grundausstattungsvarianten und Sonderausstattungsvarianten des Variomoduls zerstörungsfrei gegeneinander austauschbar sind. Durch diese Maßnahmen ist es möglich, eine Sonderausstattungsvariante auch nachträglich in die Instrumententafel zu integrieren, wobei dies im Austausch mit der jeweiligen Grundausstattungsvariante erfolgt. Der nachträgliche Einbau der Sonderausstattungsvariante hat bei der erfindungsgemäßen Instrumententafel dann dieselben Vorteile wie eine Erstmontage der Sonderausstattungsvariante. Insbesondere ist dann nicht erkennbar, ob die jeweilige Sonderausstattung nachträglich eingebaut worden ist oder bereits zur Erstausstattung zählt. Insoweit ergibt sich ein besonderer optischer und ästhetischer Vorteil der erfindungsgemäßen Instrumententafel gegenüber Lösungen aus dem Stand der Technik, die mit zusätzlich angebauten Elementen arbeiten.

Weitere wichtige Merkmale und Vorteile der erfindungsgemäßen Vorrichtung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine perspektivische Ansicht auf eine erfindungsgemäße Instrumententafel in einer ersten Ausführungsform,
- Fig. 2: eine Ansicht wie in Fig. 1, jedoch in einer zweiten Ausführungsform,
- Fig. 3: eine Ansicht wie in Fig. 1, jedoch in einer dritten Ausführungsform,
- Fig. 4: eine Ansicht wie in Fig. 1, jedoch in einer vierten Ausführungsform, und
- Fig. 5: eine perspektivische Ansicht auf ein Variomodul in seiner Grundausstattungsvariante gem. Fig. 1, jedoch in einer vergrößerten Darstellung.

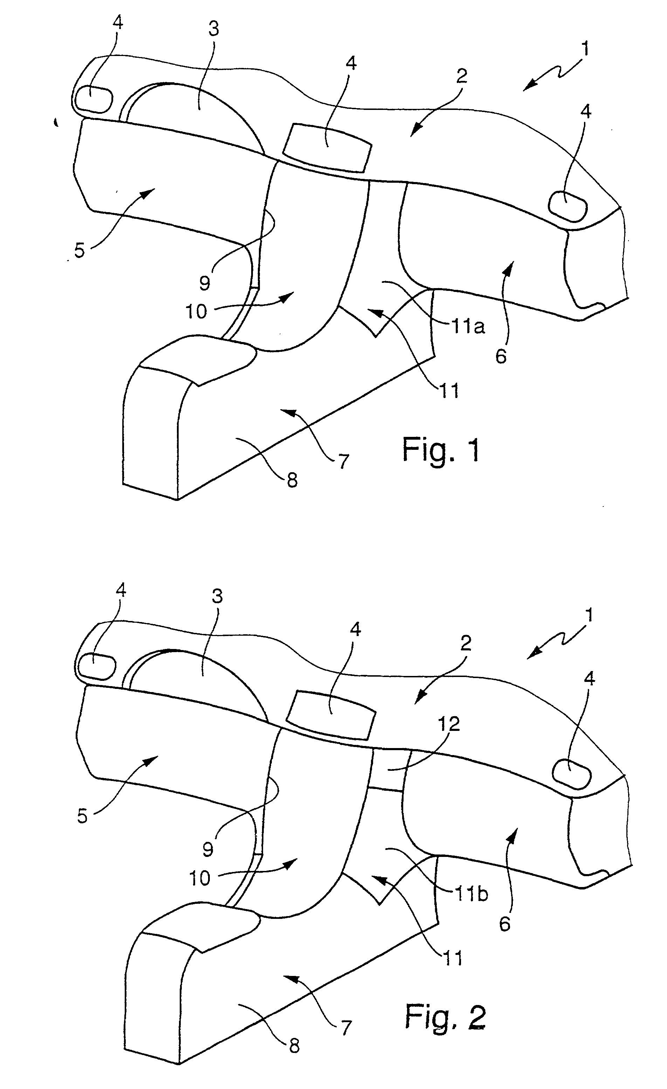

Entsprechend den Fig. 1 bis 4 weist eine modular aufgebaute Instrumententafel 1 nach der Erfindung ein Oberteilmodul 2 auf, das sich im wesentlichen über die gesamte Breite eines Fahrzeuginnenraumes unterhalb einer nicht dargestellten Windschutzscheibe erstreckt. In diesem Oberteilmodul sind hier beispielsweise Luftaustrittsdüsen 4 ausgebildet. Außerdem kann das Oberteilmodul 2 mit einer Ausnehmung 3 ausgestattet sein, in der eine Instrumentengruppe untergebracht werden kann, die für den Fahrzeugbetrieb wichtige Instrumente aufweist. Dementsprechend ist die hier dargestellte Instrumententafel 1 für ein linksgesteuertes Fahrzeug ausgebildet. Es ist klar, daß die Instrumententafel 1 in entsprechender Weise auch für ein rechtsgesteuertes Fahrzeug ausgebildet werden kann.

Auf der Fahrerseite besitzt die Instrumententafel 1 ein Fahrerseitenmodul 5, das unten am Oberteilmodul 2 angeordnet ist. Das Fahrerseitenmodul 5 kann typische Bedienelemente für den Fahrzeugführer enthalten. Außerdem ist das Fahrerseitenmodul 5 zur Aufnahme einer Lenksäule vorbereitet. Die Anbindung des Fahrerseitenmoduls 5 an das Oberteilmodul 2 erfolgt zweckmäßigerweise über Schnellbefestigungsmittel, wie z.B. Clipsverbindungen. Ebenso kann das Fahrerseitenmodul 5 mit dem Oberteilmodul 2 verschraubt sein.

Auf der Beifahrerseite ist in entsprechender Weise ein Beifahrerseitenmodul 6 unten am Oberteilmodul 2 angeordnet. Dieses Beifahrerseitenmodul 6 kann beispielsweise einen Handschuhkasten aufweisen und/oder mit einem Beifahrerairbag ausgestattet sein. Auch hier können zur Anbindung des Beifahrerseitenmoduls 6 an das Oberteilmodul 2 Schnellbefestigungsmittel vorgesehen sein.

Zwischen dem Fahrerseitenmodul 5 und dem Beifahrerseitenmodul 6 ist unten am Oberteilmodul 2 ein Mittelkonsolenmodul 7 angeordnet, dessen unterer Abschnitt als Tunnelabdeckung 8 ausgebildet sein kann und das auf einer Oberseite eine Aufnahmeöffnung 9 enthält, in die hier ein Funktionsmodul 10 eingesetzt ist. Dieses Funktionsmodul 10 kann beispielsweise eine Audioanlage und/oder eine Klimatisierungseinrichtung enthalten. Außerdem kann das Funktionsmodul 10 weitere Ablagefächer besitzen. Bei einem als Taxi ausgebildeten Fahrzeug enthält das Funktionsmodul 10 zweckmäßigerweise eine Taxametereinrichtung.

Zur Befestigung der Module aneinander werden Schnellbefestigungsmittel bevorzugt, um den Zusammenbau der Instrumententafel 1 zu vereinfachen.

Zwischen dem Mittelkonsolenmodul 7 und dem Beifahrerseitenmodul 6 ist unten am Oberteilmodul 2 ein Variomodul 11 angeordnet. Auch dieses Variomodul 11 wird vorzugsweise mit Schnellbefestigungsmitteln am Mittelkonsolenmodul 7 und/oder am Beifahrerseitenmodul 6 und/oder am Oberteilmodul 2 befestigt.

Entsprechend Fig. 1 besitzt das Variomodul 11 eine einfache Grundausstattungsvariante 11a , in der das Variomodul 11 lediglich als Verkleidungselement dient, wobei die dem Fahrzeuginnenraum ausgesetzte Außenseite des Variomoduls 11 dann so geformt ist, daß sich ein fließender Übergang zwischen den dem Fahrzeuginnenraum ausgesetzten Außenseiten des Mittelkonsolenmoduls 7 und des Beifahrerseitenmoduls 6 einstellt. Auf diese Weise ist das Variomodul 11 ein integraler Bestandteil der Instrumententafel 1, der optisch an die Kontur der Instrumententafel 1 angepaßt ist.

Entsprechend Fig. 2 kann das Variomodul 11 in einer komfortableren Ausführungsform 11b seiner Grundausstattungsvariante ein zusätzliches Ablagefach und/oder einen Cupholder 12 aufweisen. Es ist klar, daß grundsätzlich beliebige Ausgestaltungsformen für ein derartiges Ablagefach 12 bzw. für einen solchen Cupholder 12 möglich sind. Insbesondere kann das Ablagefach 12 offen sein oder mit einem Deckel verschließbar sein.

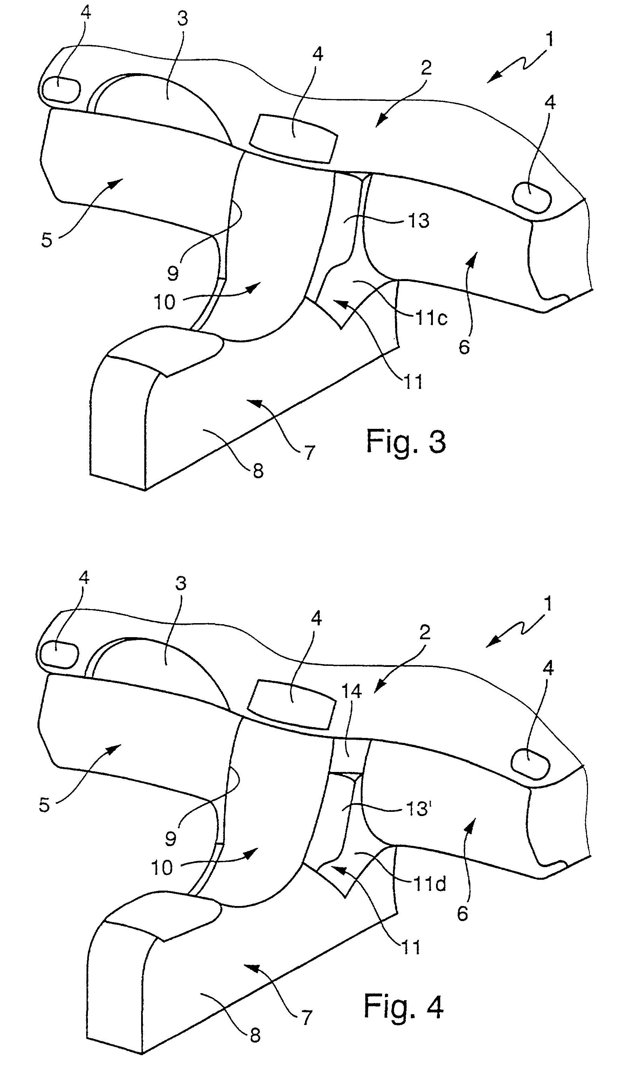

Entsprechend Fig. 3 kann das Variomodul 11 eine Sonderausstattungsvariante 11c aufweisen, die mit einer Aufnahme 13 ausgestattet sein kann. Diese Aufnahme 13 dient beispielsweise zur Ablage eines Telefonhörers einer im Fahrzeug fest installierten Telefonanlage. Ebenso kann die Aufnahme 13 zur Unterbringung eines Mobiltelefons dienen, wobei die Aufnahme 13 zweckmäßig entsprechende Anschlüsse für eine Freisprechanlage enthält. Vorzugsweise enthält das Variomodul 11 die wesentlichen Komponenten der Telefonanlage, so daß für den Zusammenbau einer mit einer Telefonanlage ausgestatteten Instrumententafel 1 lediglich die Sonderausstattungsvariante 11c anstelle einer Grundausstattungsvariante 11a oder 11b des Variomoduls 11 montiert werden muß. Es ist klar, daß anstelle einer Telefonanlage ebenso eine Funkanlage, wie z.B. ein Funktelefon, in das Variomodul 11 integriert sein kann.

Entsprechend Fig. 4 kann das Variomodul 11 in einer besonders komfortablen Ausführungsform 11d seiner Sonderausstattungsvariante neben der modifizierten Aufnahme 13' zusätzlich mit einer Ablage und/oder mit einem Cupholder 14 ausgestattet sein. Auch hier sind grundsätzlich beliebige Ausführungsformen für die Ablage 14 bzw. für den Cupholder 14 möglich.

Wie aus den Fig. 1 bis 4 hervorgeht, ist das Variomodul 11 in allen seinen Ausführungsformen optisch in die Außenkontur bzw. in die Ansicht der Instrumententafel 1 integriert, wodurch sich eine ansprechende Ästhetik erzielen läßt. Außerdem wird durch die Integration von Funktionseinheiten in das Variomodul 11 der Fußraum des Beifahrers nicht beeinträchtigt. Insbesondere ergibt sich dadurch keine Verletzungsgefahr für den Beifahrer. Für die Integration in das Variomodul 11 eignen sich zweckmäßig vor allem Sonderausstattungskomponenten, die in ihrer Anschaffung relativ teuer sind. Beispielsweise kann ein solches Variomodul 11 mit einer Freisprechanlage für ein Mobiltelefon, mit einer fest installierten Telefonanlage, mit einer Funksprechanlage, mit einer Taxametereinrichtung oder mit einer Navigationseinrichtung ausgestattet sein. Außerdem können zusätzliche Staufächer vorgesehen sein. Des weiteren kann ein Deckel oder eine Klappe vorgesehen sein, um die jeweilige Funktionseinheit, zum Beispiel Telefon, zu verdecken.

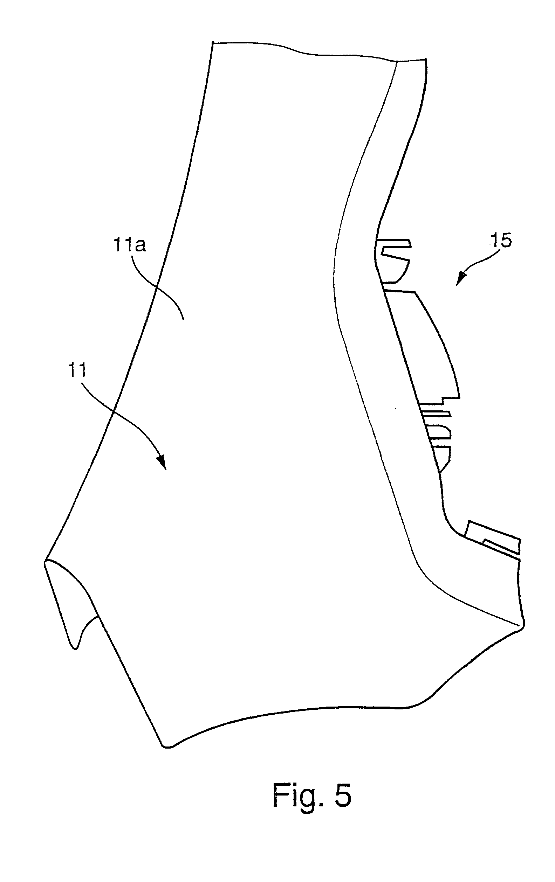

Entsprechend Fig. 5 ist das Variomodul 11, hier in der einfachen Ausführungsform 11a seiner Grundausstattungsvariante, so geformt, daß das Variomodul 11 auch dann an der Instrumententafel 1 montiert werden kann, wenn alle übrigen Module bereits montiert sind. Zu diesem Zweck weist das Variomodul 11 Schnellbefestigungsmittel 15 auf, die als Steckverbindungselemente ausgebildet sind. Von besonderem Vorteil ist es, wenn diese Befestigungselemente 15 so ausgestaltet sind, daß sie ohne Zerstörung der Befestigungselemente 15 bzw. ohne Zerstörung des Variomoduls 11 eine Demontage des Variomoduls 11 ermöglichen. Auf diese Weise ist es möglich, nachträglich eine Grundausstattungsvariante 11a oder 11b des Variomoduls 11 gegen eine Sonderausstattungsvariante 11c oder 11d des Variomoduls 11 auszutauschen. Die Instrumententafel 1 kann somit nachträglich mit höherwertigen Sonderausstattungselementen ausgerüstet werden.

Die Ausgestaltung des Variomoduls 11 sowie die Ausgestaltung seiner Schnellbefestigungsmittel 15 ist dabei zweckmäßig so gewählt, daß die unterschiedlichen Ausführungsvarianten des Variomoduls 11 auch bei fest im Fahrzeug installierter Instrumententafel 1 gegeneinander austauschbar sind, ohne daß dazu eine aufwendige Montagearbeit erforderlich ist.

## Patentansprüche

1. Modulares System zum Aufbau einer Instrumententafel (1) eines Kraftfahrzeuges,
mit einem Oberteilmodul (2), das sich im wesentlichen über die gesamte Breite des Fahrzeuginnenraumes unterhalb einer Windschutzscheibe erstreckt,
mit einem Fahrerseitenmodul (5), das auf der Fahrerseite unten am Oberteilmodul (2) befestigt ist,
mit einem Beifahrerseitenmodul (6), das auf der Beifahrerseite unten am Oberteilmodul (2) befestigt ist,
mit einem Mittelkonsolenmodul (7), das zwischen Fahrerseitenmodul (5) und Beifahrerseitenmodul (6) unten am Oberteilmodul (2) befestigt ist,
**dadurch gekennzeichnet,**
**daß** ein Variomodul (11) vorgesehen ist, das zwischen Mittelkonsolenmodul (7) und Beifahrerseitenmodul (6) unten am Oberteilmodul (2) angeordnet ist, das am Mittelkonsolenmodul (7) und/oder am Beifahrerseitenmodul (6) und/oder am Oberteilmodul (2) befestigt ist, das in einer Sonderausstattungsvariante (11c; 11d) als Funktionselement ausgebildet ist, dem eine Zusatzfunktion für die Instrumententafel (1) zugeordnet ist, und das in einer Grundausstattungsvariante (11a; 11b) als Verkleidungselement ohne Zusatzfunktion ausgebildet ist, dessen Außenseite zur Ausbildung eines fließenden Überganges zwischen den Außenseiten des Mittelkonsolenmoduls (7) und des Beifahrerseitenmoduls (6) geformt ist.

2. System nach Anspruch 1,
**dadurch gekennzeichnet,**
**daß** das Variomodul (11) in seiner Sonderausstattungsvariante (11c; 11d) zur Aufnahme eines Telefons oder einer Telefonanlage oder einer Funksprechanlage ausgebildet ist.

3. System nach Anspruch 1 oder 2,
**dadurch** gekenzeichnet,
daß das Variomodul (11) in seiner Grundausstattungsvariante (11a; 11b) und/oder in seiner Sonderausstattungsvariante (11c; 11d) einen Cupholder und/oder ein Ablagefach (12; 14) aufweist.

4. System nach einem der Ansprüche 1 bis 3,
**dadurch gekennzeichnet,**
**daß** das Variomodul (11) mit Schnellbefestigungsmitteln (15) am Beifahrerseitenmodul (6) und/oder am Mittelkonsolenmodul (7) und/oder am Oberteilmodul (2) befestigt ist.

5. System nach Anspruch 4,
**dadurch gekennzeichnet,**
**daß** die Schnellbefestigungsmittel (15) lösbar ausgebildet sind, derart, daß die Grundausstattungsvariante (11a; 11b) des Variomoduls (11) und die Sonderausstattungsvariante (11c; 11d) des Variomoduls (11) zerstörungsfrei gegeneinander austauschbar sind.

6. System nach einem der Ansprüche 1 bis 5,
**dadurch gekennzeichnet,**
**daß** aneinandergrenzende Module (2, 5, 6, 7, 10, 11) mit Schnellbefestigungsmittel aneinander befestigt sind.

7. System nach einem der Ansprüche 1 bis 6,
**dadurch gekennzeichnet,**
**daß** in das Mittelkonsolenmodul (7) ein Funktionsmodul (10) eingesetzt ist.

8. System nach Anspruch 7,
**dadurch gekennzeichnet,**
**daß** das Funktionsmodul (10) eine Klimatisierungseinrichtung und/oder eine Audioanlage und/oder eine Taxametervorrichtung und/oder eine Funksprechanlage aufweist.

## Claims

1. Modular system for building a dashboard (1) of a motor vehicle,
with a top part module (2) which essentially extends across the entire with of the vehicle interior underneath a windscreen,
a driver side module (5) which is secured underneath on the top part module (2) on the driver's side,
a front passenger side module (6), which is secured underneath on the top part module (2) on the front passenger's side,
a centre console module (7), which is secured underneath on the top part module (2) between the driver side module (5) and the front passenger side module (6),
**characterised in that**
a variable module (11) is provided, disposed underneath on the top part module (2) between the centre console module (7) and the front passenger side module (6), which is secured to the centre console module (7) and/or to the front passenger side module (6) and/or to the top part module (2) and which, in its variant (11c; 11d) for special equipment, is designed as a functional element to which an additional function for the dashboard (1) is assigned, and in its variant (11a; 11b) for basic equipment is designed as a facing element with no additional function, the external face being shaped to form a smooth transition between the external faces of the centre console module (7) and the front passenger side module (6).

2. System as claimed in claim 1,
**characterised in that**
in its variant (11c; 11d) for special equipment, the variable module (11) is designed to accommodate a telephone or a telephone system or a mobile telephone system.

3. System as claimed in claim 1 or 2,
**characterised in that**
in its variant (11a; 11b) for basic equipment and or in its variant for special equipment (11c; 11d), the variable module (11) has a cup-holder and/or a storage compartment (12; 14).

4. System as claimed in one of claims 1 to 3,
**characterised in that**
the variable module (11) is secured to the front passenger side module (6) and/or the centre console module (7) and/or the top part module (2) by rapid fixing means (15).

5. System as claimed in claim 4,
**characterised in that**
the rapid fixing means (15) can be released so that the variants of the variable module (11) designed for basic equipment (11a; 11b) and the variants of the variable module (11) designed for special equipment (11c; 11d) can be exchanged for one another without being damaged.

6. System as claimed in one of claims 1 to 5,
**characterised in that**
adjoining modules (2, 5, 6, 7, 10, 11) are secured to one another by rapid fixing means.

7. System as claimed in one of claims 1 to 6,
**characterised in that**
a functional module (10) is inserted in the centre console module (7).

8. System as claimed in claim 7,
**characterised in that**
the functional module (10) has an air-conditioning unit and/or an audio system and/or a taxi meter and/or a mobile telephone system.

## Revendications

1. Système modulaire pour la constitution d'un tableau de bord (1) sur un véhicule automobile,
comprenant un module pour la partie supérieure (2), qui s'étend principalement sur toute la largeur de l'espace intérieur du véhicule en-dessous d'un pare-brise,
comprenant un module côté conducteur (5), qui est fixé, côté conducteur, au bas du module pour la partie supérieure (2)
comprenant un module côté passager (6), qui est fixé, côté passager, au bas du module pour la partie supérieure (2),
comprenant un module pour la console centrale (7), qui est fixé entre le module côté conducteur (5) et le module côté passager (6) au bas du module pour la partie supérieure (2),
**caractérisé en ce qu'**un module variable (11) est prévu, qui est disposé entre le module pour la console centrale (7) et le module côté passager (6) au bas du module pour la partie supérieurs (2), lequel est fixé au module pour la console centrale (7) et/ou au module côté passager (6) et/ou au module pour la partie supérieure (2), lequel, dans une variante d'équipement spéciale (11c; 11d) est agencé comme un élément fonctionnel, auquel est associée une fonction supplémentaire pour le tableau de bord (1) et qui, dans une variante d'équipement de base (11a; 11b) est agencé comme un élément d'habillage sans fonction supplémentaire, dont le côté extérieur est formé de manière à constituer une transition fluide entre les côtés extérieurs du module pour la console centrale (7) et du module côté passager (6).

2. Système selon la revendication 1, **caractérisé en ce que** le module variable (11) est agencé dans sa variante d'équipement spéciale (11c; 11d) pour accueillir un téléphone ou une installation téléphonique ou une installation de communication radio.

3. Système selon la revendication 1 ou 2, **caractérisé en ce que** le module variable (11) présente, dans sa variante d'équipement de base (11a; 11b) et/ou dans sa variante d'équipement spéciale (11c; 11d) un porte-gobelet et/ou un compartiment de rangement (12; 14).

4. Système selon l'une quelconque des revendications 1 à 3, **caractérisé en ce que** le module variable (11) est fixé avec des dispositifs de fixation rapide (15) au module côté passager (6) et/ou au module pour la console centrale (7) et/ou au module pour la partie supérieure (2).

5. Système selon la revendication 4, **caractérisé en ce que** les dispositifs de fixation rapide (15) sont conçus pour être amovibles, de telle façon que la variante d'équipement de base (11a; 11b) du module variable (11) et la variante d'équipement spéciale (11c; 11d) du module variable (11) peuvent être permutés sans dommages.

6. Système selon l'une quelconque des revendications 1 à 5, **caractérisé en ce que** les modules attenants (2, 5, 6, 7, 10, 11) sont fixés les uns aux autres à l'aide de dispositifs de fixation rapide.

7. Système selon l'une quelconque des revendications 1 à 6, **caractérisé en ce qu'**un module fonctionnel (10) est utilisé dans le module pour la console centrale (7)

8. Système selon la revendication 7, **caractérisé en ce que** le module fonctionnel (10) présente une installation de climatisation et/ou une installation radio et/ou un taximètre et/ou une installation de communication radio.
